# EUROPEAN PATENT SPECIFICATION

(11) **EP 4 410 797 B1**
(45) Date of publication and mention of the grant of the patent: **23.09.2026**
(21) Application number: 22875758.9
(22) Date of filing: 08.09.2022
(51) Int. Cl.: C07F 7/18

(54) **METHOD FOR PRODUCING CYCLIC SILAZANE COMPOUND**
VERFAHREN ZUR HERSTELLUNG EINER CYCLISCHEN SILAZANVERBINDUNG
PROCÉDÉ DE PRODUCTION D'UN COMPOSÉ SILAZANE CYCLIQUE

(30) Priority: 29.09.2021 JP 2021158830
(43) Date of publication of application: 07.08.2024
(73) Proprietor: SHIN-ETSU CHEMICAL CO., LTD., Tokyo 1000005 (JP)
(72) Inventor: KAWAKAMI Masato, Joetsu-shi, Niigata 942-8601 (JP); ICHII Shun, Joetsu-shi, Niigata 942-8601 (JP)
(74) Representative: Mewburn Ellis LLP
(86) International application number: PCT/JP2022/033658
(87) International publication number: WO 2023/053886

(56) References cited:
- CN-A- 110 862 408
- CN-A- 110 862 408
- CN-A- 112 430 245
- JP-A- 2011 102 267
- JP-A- 2011 162 500
- JP-A- 2011 162 500
- JP-A- H07 504 211

## Description

### TECHNICAL FIELD

This invention relates to a method for preparing cyclic silazane compounds.

### BACKGROUND ART

Nitrogen-containing organoxysilane compounds are useful as silane coupling agents, surface treating agents, resin additives, paint additives and the like.

Known nitrogen-containing organoxysilane compounds include organoxysilane compounds having a primary amino group such as aminopropyltrimethoxysilane, organoxysilane compounds having a secondary amino group such as N-phenylaminopropyltrimethoxysilane, and organoxysilane compounds having a tertiary amino group such as dimethylaminopropyltrimethoxysilane. Of these, the organoxysilane compounds having a secondary amino group, referred to as "secondary aminosilane compounds," hereinafter, can be subjected to intramolecular cyclization between the amino group and the alkoxysilane site in the molecule into cyclic silazane compounds.

The cyclic silazane compounds have the advantage that the amount of alcohol produced during hydrolysis can be reduced as compared with corresponding secondary aminosilane compounds. Since the cyclic silazane compounds do not possess active hydrogen on nitrogen, compositions obtained by mixing them with resins having a functional group capable of reacting with an amino group are stable unless they are brought into contact with alcohols or water. The cyclic silazane compounds are useful in this sense.

It is known that the Si-N structure in the cyclic silazane compounds is so reactive that it quickly reacts with airborne moisture and hydroxy groups in compounds, resulting in ring-opening. Thus, the cyclic silazane compounds can be used, for example, as surface treating agents in that they quickly react with reactive hydroxy groups on the metal surface.

When the cyclic silazane compounds are used as surface treating agents, any of various functions can be imparted to the article to be treated, depending on the type of substituent group on nitrogen. For example, it is possible to impart hydrophobic properties when cyclic silazane compounds have a hydrocarbon group such as butyl, octyl or phenyl, hydrophilic properties when cyclic silazane compounds have a hydrophilic functional group such as amino, and crosslinking ability when cyclic silazane compounds have an alkoxysilyl group.

Also, cyclic silazane compounds are fully hydrolyzable because they quickly react with airborne moisture. With the progress of hydrolytic condensation, a cured coating can be formed.

For the synthesis of cyclic silazane compounds, Patent Documents 1 and 2 propose a method comprising the steps of distilling a secondary aminosilane compound in the presence of a catalytic amount of an acidic or basic compound for inducing intramolecular cyclization to produce an alcohol, and removing the alcohol out of the system under reduced pressure.

For example, intramolecular cyclization reaction is carried out in the presence of sodium methoxide as the basic compound in Patent Document 1, and in the presence of sodium amide or sodium methoxide as the basic compound in Patent Document 2.

Also, Patent Document 3 proposes intramolecular cyclization of a secondary aminosilane compound in the presence of a catalytic amount of an acidic compound and a silylamine compound such as hexamethyldisilazane. This is an efficient synthesis method capable of restraining reverse reaction by letting the silylamine compound trap the alcohol resulting from intramolecular cyclization.

### PRIOR ART DOCUMENTS

### PATENT DOCUMENTS

Patent Document 1: JP-A 2011-102267
Patent Document 2: CN 110862408
Patent Document 3: JP-A 2015-160811

### SUMMARY OF INVENTION

### TECHNICAL PROBLEM

In the methods of Patent Documents 1 and 2, the equilibrium relationship between the secondary aminosilane compound and the cyclic silazane compound is varied by physically removing the alcohol. These methods, however, have the problem that the efficiency of alcohol removal is reduced as the reaction scale is increased. It takes a longer time until the cyclic silazane compound is formed. The conversion rate from the secondary aminosilane compound to the cyclic silazane compound is insufficient. In addition, to isolate the target compound, cyclic silazane compound, it is necessary to separate the cyclic silazane compound and the reactant, secondary aminosilane compound by distillation purification. There arise problems that the isolation yield is insufficient and the distillation purification takes a time. Because of long-term heating in the presence of an acidic or basic catalyst, the methods cannot be applied to those compounds which are unstable under acidic or basic conditions.

In particular, the method of Patent Document 2 uses a solid metal amide compound (e.g., sodium amide or potassium amide) which is highly reactive and must be carefully handled. Such reagents are less soluble in ordinary organic solvents with a possibility that a satisfactory conversion rate is not reached within a short time. The metal amide compound readily reacts with airborne moisture and is decomposed into a metal hydroxide and ammonia. The metal hydroxide causes to decompose the cyclic silazane compound whereas ammonia will react with the cyclic silazane compound and the secondary aminosilane compound to form higher molecular weight compounds. There is a possibility that yield and purity are reduced. Moreover, while the metal amide compound reacts with the alcohol which is produced along with formation of cyclic silazane during the reaction, it is decomposed into a metal alkoxide and ammonia. The formation of ammonia similarly invites a possibility that yield and purity are reduced.

In the method of Patent Document 3, the equilibrium relationship between the secondary aminosilane compound and the cyclic silazane compound is varied by causing a silylamine compound to react with the alcohol for chemical transformation. To increase the formation rate of the cyclic silazane compound, however, the reaction product of the silylamine compound and the alcohol must be removed from the reaction solution. This raises a problem like Patent Document 1.

Because of long-term heating under acidic conditions, the method cannot be applied to those compounds which are unstable under acidic conditions. Since the reaction product of silylamine compound and alcohol which is produced with the progress of reaction can react with the cyclic silazane compound, there is a problem that the desired cyclic silazane compound cannot be obtained or its purity is reduced.

An object of the invention, which has been made under the above-mentioned circumstances, is to provide a method for preparing cyclic silazane compounds at a high conversion rate within a short time.

### SOLUTION TO PROBLEM

Making extensive investigations to attain the above object, the inventors have found that a cyclic silazane compound is efficiently produced in a short time by subjecting a secondary aminosilane compound to intramolecular cyclization in the presence of an equivalent or more amount of a basic compound selected from organometallic compounds and organometallic amide compounds. The invention is predicated on this finding.

The invention provides the following.
1. A method for preparing a cyclic silazane compound comprising the step of subjecting an organoxysilane compound having a secondary amino group, represented by the general formula (1): 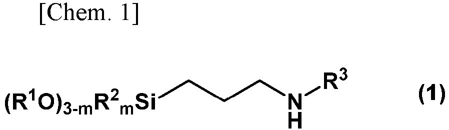 wherein R¹ and R² are each independently a C₁-C₁₀ unsubstituted monovalent hydrocarbon group, R³ is a C₁-C₁₀ monovalent hydrocarbon group which may contain an amino or alkoxysilyl group, and m is 0, 1 or 2, to intramolecular cyclization in the presence of an equivalent or more amount of a basic compound selected from organometallic compounds and organometallic amide compounds,
   the cyclic silazane compound having the general formula (2): 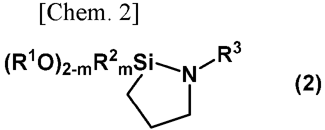 wherein R¹ to R³ and m are as defined above; and further comprising converting alcohols produced by the intramolecular cyclization to metal alkoxides.
2. The method for preparing a cyclic silazane compound according to 1 wherein the metal is at least one element selected from lithium, sodium, potassium and magnesium.
3. The method for preparing a cyclic silazane compound according to 1 or 2, wherein said basic compound is at least one selected from the group consisting of n-butyllithium, tert-butyllithium, phenyllithium, isopropylmagnesium chloride, sec-butylmagnesium chloride, tert-butylmagnesium chloride, thexylmagnesium chloride, lithium diisopropylamide, lithium isopropyl-tert-butylamide, lithium di(tert-butyl)amide,lithium hexamethyldisilazide, sodium diisopropylamide, sodium isopropyl-tert-butylamide, sodium di(tert-butyl)amide, sodium hexamethyldisilazide, potassium hexamethyldisilazide, chloromagnesium diisopropylamide, chloromagnesium hexamethyldisilazide, and bromomagnesium hexamethyldisilazide.

### ADVANTAGEOUS EFFECTS OF INVENTION

According to the preparation method of the invention, cyclic silazane compounds can be readily prepared at a high conversion rate in a short time. Even cyclic silazane compounds having the structure which is difficult to synthesize by the prior art methods can be synthesized.

The resulting cyclic silazane compounds find a variety of applications depending on the substituent group on nitrogen.

### BRIEF DESCRIPTION OF DRAWINGS

[FIG. 1] FIG. 1 is a diagram showing the IR spectrum of 2,2-diethoxy-N-triethoxysilylmethyl-1-aza-2-silacyclopentane obtained in Example 7.
[FIG. 2] FIG. 2 is a diagram showing the ¹H-NMR spectrum of 2,2-diethoxy-N-triethoxysilylmethyl-1-aza-2-silacyclopentane obtained in Example 7.
[FIG. 3] FIG. 3 is a diagram showing the IR spectrum of 2,2-dimethoxy-N-trimethoxysilylmethyl-1-aza-2-silacyclopentane obtained in Example 9.
[FIG. 4] FIG. 4 is a diagram showing the ¹H-NMR spectrum of 2,2-dimethoxy-N-trimethoxysilylmethyl-1-aza-2-silacyclopentane obtained in Example 9.

### DESCRIPTION OF EMBODIMENTS

Now the invention is described in detail.

The invention provides a method for preparing a cyclic silazane compound having the general formula (2), referred to as "Compound (2)," hereinafter, comprising the step of subjecting an organoxysilane compound having a secondary amino group, represented by the general formula (1), referred to as "Compound (1)," hereinafter, to intramolecular cyclization in the presence of an equivalent or more amount of a basic compound selected from organometallic compounds and organometallic amide compounds.

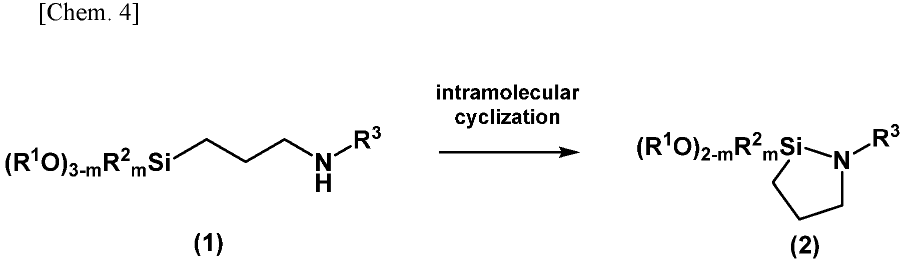

Herein m is 0, 1 or 2.

In general, when Compound (1) is converted to Compound (2), an alcohol is produced. If the alcohol produced is left in the reaction system, the alcohol will react with Compound (2) to form Compound (1). That is, Compound (1) and Compound (2) are in equilibrium relationship as shown by the following scheme.

According to the invention, Compound (1) is subjected to intramolecular cyclization in the presence of a basic compound whereby the alcohol resulting from Compound (1) is converted to a metal alkoxide (R¹O⁻) to inhibit the reverse reaction from Compound (2) to Compound (1). The equilibrium is thus biased toward the formation of Compound (2), ensuring that Compound (2) is obtained.

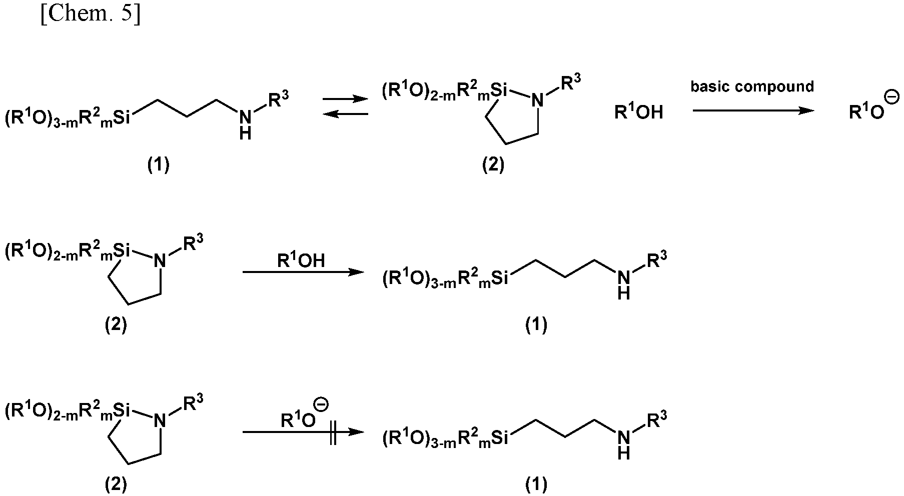

Herein m is 0, 1 or 2.

In formula (1), R¹ and R² are each independently a C₁-C₁₀, preferably C₁-C₆, more preferably C₁-C₃ unsubstituted monovalent hydrocarbon group.

The monovalent hydrocarbon groups R¹ and R² may be straight, branched or cyclic and examples thereof include straight alkyl groups such as methyl, ethyl, n-propyl, n-butyl, n-pentyl, n-hexyl, n-heptyl, n-octyl and decyl; branched alkyl groups such as isopropyl, isobutyl, sec-butyl, tert-butyl, neopentyl, thexyl and 2-ethylhexyl; cyclic alkyl groups such as cyclopentyl and cyclohexyl; alkenyl groups such as vinyl, allyl, propenyl, butenyl, pentenyl and octenyl; aryl groups such as phenyl and tolyl; and aralkyl groups such as benzyl and phenethyl.

Of these, methyl and ethyl are preferred from the aspect of availability of reactants.

R³ is a C₁-C₁₀, preferably C₁-C₆, more preferably C₁-C₃ monovalent hydrocarbon group which may contain an amino or alkoxysilyl group. Examples of the monovalent hydrocarbon group are as exemplified above for R¹. Of these, propyl, butyl, octyl, octenyl and phenyl are preferred from the aspect of availability of reactants.

Examples of the amino-containing monovalent hydrocarbon group R³ include aminoalkyl groups such as aminoethyl, aminopropyl and aminooctyl; alkylaminoalkyl groups such as methylaminoethyl, ethylaminoethyl, butylaminoethyl, and tert-butylaminoethyl; dialkylaminoalkyl groups such as dimethylaminoethyl, diethylaminoethyl, morpholinoethyl, piperazinoethyl, and methylpiperazinoethyl; aminoalkylaminoalkyl groups such as aminoethylaminoethyl; and bis(trialkylsilyl)aminoalkyl groups such as bis(trimethylsilyl)aminoethyl.

Of these, aminoalkyl groups are preferred from the aspect of availability of reactants, with aminoethyl being more preferred.

Examples of the alkoxysilyl-containing monovalent hydrocarbon group R³ include trialkoxysilylalkyl groups such as trimethoxysilylpropyl, triethoxysilylpropyl, trimethoxysilylmethyl, triethoxysilylmethyl, trimethoxysilyloctyl, triethoxysilyloctyl, trimethoxysilylethylphenylmethyl, and triethoxysilylethylphenylmethyl; alkyldialkoxysilylalkyl groups such as methyldimethoxysilylpropyl and methyldiethoxysilylpropyl; and dialkylalkoxysilylalkyl groups such as dimethylmethoxysilylpropyl and dimethylethoxysilylpropyl.

Of these, trimethoxysilylpropyl and triethoxysilylpropyl are preferred from the aspect of availability of reactants, and trimethoxysilylpropyl, triethoxysilylpropyl, trimethoxysilylmethyl and triethoxysilylmethyl are preferred from the aspect of product usefulness.

Examples of Compound (1) include
alkylaminopropyltrialkoxysilane compounds such as butylaminopropyltrimethoxysilane, octylaminopropyltrimethoxysilane, allylaminopropyltrimethoxysilane, octenylaminopropyltrimethoxysilane, phenylaminopropyltrimethoxysilane, butylaminopropyltriethoxysilane, octylaminopropyltriethoxysilane, allylaminopropyltriethoxysilane, octenylaminopropyltriethoxysilane, and phenylaminopropyltriethoxysilane;
alkylaminopropylalkyldialkoxysilane compounds such as butylaminopropylmethyldimethoxysilane, octylaminopropylmethyldimethoxysilane, allylaminopropylmethyldimethoxysilane, octenylaminopropylmethyldimethoxysilane, phenylaminopropylmethyldimethoxysilane, butylaminopropylmethyldiethoxysilane, octylaminopropylmethyldiethoxysilane, allylaminopropylmethyldiethoxysilane, octenylaminopropylmethyldiethoxysilane, and phenylaminopropylmethyldiethoxysilane;
alkylaminopropyldialkylalkoxysilane compounds such as butylaminopropyldimethylmethoxysilane, octylaminopropyldimethylmethoxysilane, allylaminopropyldimethylmethoxysilane, octenylaminopropyldimethylmethoxysilane, and phenylaminopropyldimethylmethoxysilane;
aminoalkylalkoxysilane compounds such as aminoethylaminopropyltrimethoxysilane, aminoethylaminopropyltriethoxysilane, aminoethylaminopropylmethyldimethoxysilane, aminoethylaminopropylmethyldiethoxysilane, aminopropylaminopropyltrimethoxysilane, aminopropylaminopropyltriethoxysilane, aminopropylaminopropylmethyldimethoxysilane, aminopropylaminopropylmethyldiethoxysilane, dimethylaminoethylaminopropyltrimethoxysilane, diethylaminoethylaminopropyltrimethoxysilane, morpholinoethylaminopropyltrimethoxysilane, piperazinoethylaminopropyltrimethoxysilane, methylpiperazinoethylaminopropyltrimethoxysilane, aminoethylaminoethylaminopropyltrimethoxysilane, and aminoethylaminoethylaminopropyltriethoxysilane; and
bis(alkoxysilylalkyl)amine compounds such as bis(trimethoxysilylpropyl)amine, bis(triethoxysilylpropyl)amine, (trimethoxysilylpropyl)(trimethoxysilylmethyl)amine, (trimethoxysilylpropyl)(dimethylmethoxysilylmethyl)amine, (triethoxysilylpropyl)(triethoxysilylmethyl)amine, (triethoxysilylpropyl)(dimethylethoxysilylmethyl)amine, (trimethoxysilylpropyl)(trimethoxysilyloctyl)amine, and (triethoxysilylpropyl)(triethoxysilyloctyl)amine.

The basic compound used in the inventive preparation method is selected from organometallic compounds and organometallic amide compounds.

Examples of the organometallic compounds include organolithium reagents such as n-butyllithium, tert-butyllithium, and phenyllithium; and organomagnesium reagents, typically Grignard reagents such as isopropylmagnesium chloride, sec-butylmagnesium chloride, tert-butylmagnesium chloride, and thexylmagnesium chloride.

Examples of the organometallic amide compounds include lithium amides such as lithium diisopropylamide, lithium isopropyl-tert-butylamide, lithium di(tert-butyl)amide, and lithium hexamethyldisilazide; sodium amides such as sodium diisopropylamide, sodium isopropyl-tert-butylamide, sodium di(tert-butyl)amide, and sodium hexamethyldisilazide; potassium amides such as potassium hexamethyldisilazide; and magnesium amides such as chloromagnesium diisopropylamide, chloromagnesium hexamethyldisilazide, and bromomagnesium hexamethyldisilazide.

Either one or a mixture of two or more of organometallic compounds and organometallic amide compounds may be used. The organometallic compounds and organometallic amide compounds may be used alone or in admixture as the basic compound.

Of the foregoing basic compounds, tert-butylmagnesium chloride, sodium hexamethyldisilazide and chloromagnesium hexamethyldisilazide are preferred from the aspects of reactivity and ease of handling.

A commercially available basic compound may be used as purchased or a basic compound prepared immediately before the reaction may be used. It is recommended to use a basic compound prepared immediately before the reaction, from the aspect of preventing the compound from deactivation. For the preparation of the basic compound, any well-known methods may be used. For example, the organometallic compound may be prepared by mixing a metal such as lithium or magnesium with an alkyl halide and inducing a metal-halogen exchange reaction. On the other hand, the organometallic amide compound may be prepared by mixing a metal, metal hydride or organometallic compound with an amine compound.

In the inventive preparation method, the basic compound may be used in the form of a solution. The solvent used herein is not particularly limited as long as it does not react with Compound (1) and Compound (2) and does not deactivate the basic compound. Examples include aromatic hydrocarbon solvents such as toluene and xylene, and ether solvents such as diethyl ether, tetrahydrofuran, cyclopentyl methyl ether, 4-methyltetrahydropyran, and methyl tert-butyl ether, which may be used alone or in admixture. In particular, tetrahydrofuran, cyclopentyl methyl ether, and 4-methyltetrahydropyran are preferred from the aspects of reactivity and yield.

Although the amount of the solvent used is not particularly limited, it is preferred from the aspects of economy and reactivity to use 100 to 3,000 g, more preferably 300 to 1,000 g of the solvent per 1.0 mole of Compound (1).

An (iso)paraffin compound such as hexane, octane, isooctane, decane, dodecane or isododecane may be used along with the solvent. Since the (iso)paraffin compound renders the reaction solution less polar, a salt formed with the progress of reaction is more likely to precipitate.

The amount of the basic compound used in the inventive preparation method is preferably 1.0 to 2.0 moles per 1.0 mole of Compound (1). From the aspect of reactivity, the amount is more preferably 1.0 to 1.5 moles, even more preferably 1.0 to 1.2 moles.

The reaction temperature, though not particularly limited, is preferably -10°C to 150°C, more preferably 0 to 100°C.

The reaction time, though not particularly limited, is preferably 1 to 40 hours, more preferably 1 to 20 hours.

It is noted that the reaction is preferably carried out in an inert gas atmosphere such as nitrogen or argon in order to prevent Compound (1), Compound (2) and the basic compound from hydrolysis.

The reaction may be further promoted by causing the metal alkoxide (R¹O⁻) produced in the course of reaction to further react with another compound.

Examples of the compound capable of reacting with the metal alkoxide include 2-chloropyridine, 2-bromopyridine, 2-chloropyrazine, 2-bromopyrazine, methyl 2-chlorobenzoate, ethyl 2-chlorobenzoate, 2-chloronitrobenzene, 4-chloronitrobenzene, 2-bromonitrobenzene, and 4-bromonitrobenzene.

When the compound capable of reacting with the metal alkoxide is used, the amount of the compound is preferably 1 to 1.5 moles, more preferably 1.05 to 1.2 moles relative to the metal alkoxide, though not particularly limited.

According to the inventive preparation method, an alkoxysilyl-containing cyclic silazane compound having the formula (3), referred to as "Compound (3)," hereinafter, is obtainable. Since Compound (3) has an aminomethylalkoxysilyl structure in its molecule, which is extremely more reactive than an aminopropylalkoxysilyl structure, it is extremely highly hydrolyzable and expected to find application to fast-curing materials and the like.

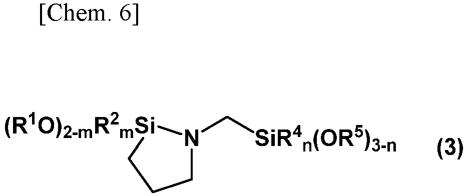

Herein R¹, R² and m are as defined above, and n is 0, 1 or 2.

In formula (3), R⁴ and R⁵ are each independently a C₁-C₆, preferably C₁-C₃ unsubstituted monovalent hydrocarbon group. Examples of the monovalent hydrocarbon group are as exemplified above for R¹, but of 1 to 6 carbon atoms. Inter alia, alkyl groups of 1 to 3 carbon atoms are preferred, with methyl and ethyl being more preferred.

Examples of Compound (2), inclusive of Compound (3), obtained from the inventive preparation method include
cyclic silazane compounds having a hydrocarbon group such as 2,2-dimethoxy-N-butyl-1-aza-2-silacyclopentane, 2,2-dimethoxy-N-octyl-1-aza-2-silacyclopentane, 2,2-dimethoxy-N-phenyl-1-aza-2-silacyclopentane, 2,2-dimethoxy-N-allyl-1-aza-2-silacyclopentane, 2,2-dimethoxy-N-octenyl-1-aza-2-silacyclopentane, 2,2-dimethoxy-N-styryl-1-aza-2-silacyclopentane, 2-methoxy-2-methyl-N-butyl-1-aza-2-silacyclopentane, 2-methoxy-2-methyl-N-octyl-1-aza-2-silacyclopentane, 2-methoxy-2-methyl-N-phenyl-1-aza-2-silacyclopentane, 2-methoxy-2-methyl-N-allyl-1-aza-2-silacyclopentane, 2-methoxy-2-methyl-N-octenyl-1-aza-2-silacyclopentane, 2-methoxy-2-methyl-N-styryl-1-aza-2-silacyclopentane, 2,2-diethoxy-N-butyl-1-aza-2-silacyclopentane, 2,2-diethoxy-N-octyl-1-aza-2-silacyclopentane, 2,2-diethoxy-N-phenyl-1-aza-2-silacyclopentane, 2,2-diethoxy-N-allyl-1-aza-2-silacyclopentane, 2,2-diethoxy-N-octenyl-1-aza-2-silacyclopentane, 2,2-diethoxy-N-styryl-1-aza-2-silacyclopentane, 2-ethoxy-2-methyl-N-butyl-1-aza-2-silacyclopentane, 2-ethoxy-2-methyl-N-octyl-1-aza-2-silacyclopentane, 2-ethoxy-2-methyl-N-phenyl-1-aza-2-silacyclopentane, 2-ethoxy-2-methyl-N-allyl-1-aza-2-silacyclopentane, 2-ethoxy-2-methyl-N-octenyl-1-aza-2-silacyclopentane, and 2-ethoxy-2-methyl-N-styryl-1-aza-2-silacyclopentane;
cyclic silazane compounds having an amino group such as 2,2-dimethoxy-N-(aminoethyl)-1-aza-2-silacyclopentane, 2-methoxy-2-methyl-N-(aminoethyl)-1-aza-2-silacyclopentane, 2,2-diethoxy-N-(aminoethyl)-1-aza-2-silacyclopentane, 2-ethoxy-2-methyl-N-(aminoethyl)-1-aza-2-silacyclopentane, 2,2-dimethoxy-N-(aminopropyl)-1-aza-2-silacyclopentane, 2,2-dimethoxy-N-(aminoethylaminoethyl)-1-aza-2-silacyclopentane, 2,2-dimethoxy-N-(dimethylaminoethyl)-1-aza-2-silacyclopentane, 2,2-dimethoxy-N-(diethylaminoethyl)-1-aza-2-silacyclopentane, and 2,2-dimethoxy-N-(morpholinoethyl)-1-aza-2-silacyclopentane;
cyclic silazane compounds having a trialkoxysilylalkyl group such as 2,2-dimethoxy-N-(trimethoxysilylpropyl)-1-aza-2-silacyclopentane, 2,2-dimethoxy-N-(trimethoxysilylmethyl)-1-aza-2-silacyclopentane, 2,2-dimethoxy-N-(trimethoxysilyloctyl)-1-aza-2-silacyclopentane, 2-methoxy-2-methyl-N-(trimethoxysilylpropyl)-1-aza-2-silacyclopentane, 2-methoxy-2-methyl-N-(trimethoxysilyloctyl)-1-aza-2-silacyclopentane, 2,2-diethoxy-N-(triethoxysilylpropyl)-1-aza-2-silacyclopentane, 2,2-diethoxy-N-(triethoxysilylmethyl)-1-aza-2-silacyclopentane, 2,2-diethoxy-N-(triethoxysilyloctyl)-1-aza-2-silacyclopentane, 2-ethoxy-2-methyl-N-(triethoxysilylpropyl)-1-aza-2-silacyclopentane, 2-ethoxy-2-methyl-N-(triethoxysilyloctyl)-1-aza-2-silacyclopentane, 2,2-dimethoxy-N-(trimethoxysilylthioethyl)-1-aza-2-silacyclopentane, and 2-methoxy-2-methyl-N-(trimethoxysilylthioethyl)-1-aza-2-silacyclopentane;
cyclic silazane compounds having an alkyldialkoxysilylalkyl group such as 2,2-dimethoxy-N-(methyldimethoxysilyl propyl)-1-aza-2-silacyclopentane, 2,2-dimethoxy-N-(methyldimethoxysilylmethyl)-1-aza-2-silacyclopentane, 2,2-dimethoxy-N-(methyldimethoxysilyloctyl)-1-aza-2-silacyclopentane, 2-methoxy-2-methyl-N-(methyldimethoxysilyloctyl)-1-aza-2-silacyclopentane, 2,2-diethoxy-N-(methyldiethoxysilylpropyl)-1-aza-2-silacyclopentane, 2,2-diethoxy-N-(methyldiethoxysilylmethyl)-1-aza-2-silacyclopentane, 2,2-diethoxy-N-(methyldiethoxysilyloctyl)-1-aza-2-silacyclopentane, 2-ethoxy-2-methyl-N-(methyldiethoxysilyloctyl)-1-aza-2-silacyclopentane, 2,2-dimethoxy-N-(methyldimethoxysilylthioethyl)-1-aza-2-silacyclopentane, and 2-methoxy-2-methyl-N-(methyldimethoxysilylthioethyl)-1-aza-2-silacyclopentane; and
cyclic silazane compounds having a dialkylalkoxysilylalkyl group such as 2,2-dimethoxy-N-(dimethylmethoxysilylmethyl)-1-aza-2-silacyclopentane, 2,2-dimethoxy-N-(dimethylmethoxysilyloctyl)-1-aza-2-silacyclopentane, 2-methoxy-2-methyl-N-(dimethylmethoxysilyloctyl)-1-aza-2-silacyclopentane, 2,2-dimethoxy-N-(diethylmethoxysilyloctyl)-1-aza-2-silacyclopentane, 2-methoxy-2-methyl-N-(dimethylmethoxysilyloctyl)-1-aza-2-silacyclopentane, 2,2-dimethoxy-N-(diphenylmethoxysilylhexyl)-1-aza-2-silacyclopentane, 2,2-dimethoxy-N-(diphenylmethoxysilyloctyl)-1-aza-2-silacyclopentane, 2-methoxy-2-methyl-N-(diphenylmethoxysilyloctyl)-1-aza-2-silacyclopentane, and 2,2-diethoxy-N-(dimethylethoxysilylmethyl)-1-aza-2-silacyclopentane.

Through the series of reactions, there is obtained a mixture containing Compound (2), the salt resulting from the basic compound, and the solvent, or sometimes such a mixture further containing Compound (1).

The desired Compound (2) may be isolated and purified from the mixture by any method selected from purifying methods for ordinary organic synthesis such as filtration, distillation, vacuum stripping, various chromatography processes, and treatment with adsorbents.

Inter alia, purification by distillation is preferred because the desired compound is obtained in high purity. More preferably, the salt resulting from the metal compound is filtered off before distillation.

### EXAMPLES

Examples and Comparative Examples are given below for further illustrating the invention although the invention is not limited thereto.

In Examples and Comparative Examples, the conversion rate is determined by performing gas chromatography (GC) analysis and calculating according to the following formula from the area values of reactant and product.$\left(area value of Compound 3\right) / \left(area value of Compound 1+area value of Compound 3\right) \times 100$

### [Example 1]

### Synthesis of 2,2-dimethoxy-N-trimethoxysilylpropyl-1-aza-2-silacyclopentane

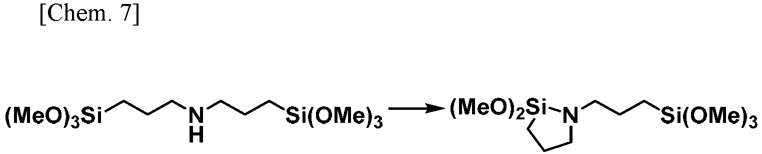

Herein Me stands for methyl (the same holds true, hereinafter).

A four-necked glass flask equipped with a stirrer, thermometer, and reflux condenser was purged with nitrogen, charged with a 40 wt% tetrahydrofuran (THF) solution of 24.1 g (0.0526 mol) of sodium hexamethyldisilazide, and cooled at 5°C. To the flask, 17.1 g (0.0500 mol) of bis(trimethoxysilylpropyl)amine was added dropwise over 20 minutes, followed by 5 minutes of stirring at the temperature. A gas chromatography (GC) analysis of the reaction solution revealed that 2,2-dimethoxy-N-trimethoxysilylpropyl-1-aza-2-silacyclopentane was formed at a conversion rate of 99%.

### [Example 2]

### Synthesis of 2,2-dimethoxy-N-trimethoxysilylpropyl-1-aza-2-silacyclopentane

A four-necked glass flask equipped with a stirrer, thermometer, and reflux condenser was purged with nitrogen, charged with a 30 wt% methyltetrahydropyran (MTHP) solution of 85.7 g (0.116 mol) of chloromagnesium hexamethyldisilazide, and heated at 60°C. To the flask, 34.1 g (0.100 mol) of bis(trimethoxysilylpropyl)amine was added dropwise over 1 hour, followed by 1 hour of aging at the temperature. The reaction solution was then aged at 100°C for 1 hour. A GC analysis of the reaction solution revealed that 2,2-dimethoxy-N-trimethoxysilylpropyl-1-aza-2-silacyclopentane was formed at a conversion rate of 93%.

### [Example 3]

### Synthesis of 2,2-dimethoxy-N-trimethoxysilylpropyl-1-aza-2-silacyclopentane

A four-necked glass flask equipped with a stirrer, thermometer, and reflux condenser was purged with nitrogen, charged with a 18 wt% THF solution of 76.2 g (0.117 mol) of tert-butylmagnesium chloride, and heated at 60°C. To the flask, 34.1 g (0.100 mol) of bis(trimethoxysilylpropyl)amine was added dropwise over 1 hour, followed by 1 hour of aging at the temperature. The reaction solution was then aged under reflux for 1 hour. A GC analysis of the reaction solution revealed that 2,2-dimethoxy-N-trimethoxysilylpropyl-1-aza-2-silacyclopentane was formed at a conversion rate of 85%.

### [Example 4]

### Synthesis of 2,2-dimethoxy-N-butyl-1-aza-2-silacyclopentane

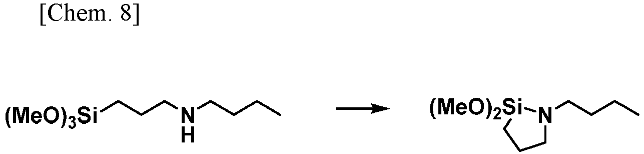

A four-necked glass flask equipped with a stirrer, thermometer, and reflux condenser was purged with nitrogen and charged with a 40 wt% THF solution of 58.1 g (0.0127 mol) of sodium hexamethyldisilazide. To the flask, 31.0 g (0.124 mol) of N-butyl(trimethoxysilylpropyl)amine was added dropwise over 1 hour. The reaction solution was then stirred at 60°C for 2 hours. A GC analysis of the reaction solution revealed that 2,2-dimethoxy-N-butyl-1-aza-2-silacyclopentane was formed at a conversion rate of 92%.

### [Example 5]

### Synthesis of 2,2-dimethoxy-N-(aminoethyl)-1-aza-2-silacyclopentane

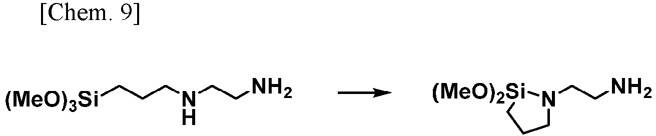

A four-necked glass flask equipped with a stirrer, thermometer, and reflux condenser was purged with nitrogen and charged with a 40 wt% THF solution of 58.1 g (0.0127 mol) of sodium hexamethyldisilazide. To the flask, 22.4 g (0.100 mol) of aminoethylaminopropyltrimethoxysilane was added dropwise over 1 hour. The reaction solution was then stirred at 60°C for 2 hours. A GC analysis of the reaction solution revealed that 2,2-dimethoxy-N-(aminoethyl)-1-aza-2-silacyclopentane was formed at a conversion rate of 60%.

### [Example 6]

### Synthesis of 2,2-diethoxy-N-triethoxysilyloctyl-1-aza-2-silacyclopentane

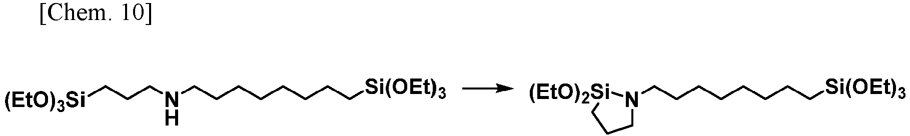

Herein Et stands for ethyl (the same holds true, hereinafter).

A four-necked glass flask equipped with a stirrer, thermometer, and reflux condenser was purged with nitrogen, charged with a 40 wt% THF solution of 73.0 g (0.159 mol) of sodium hexamethyldisilazide, and cooled at 5°C. To the flask, 72.1 g (0.145 mol) of (triethoxysilyloctyl)(triethoxysilylpropyl)amine was added dropwise over 1 hour. The reaction solution was stirred at the temperature for 1 hour. A GC analysis of the reaction solution revealed that 2,2-diethoxy-N-triethoxysilyloctyl-1-aza-2-silacyclopentane was formed at a conversion rate of 88%.

### [Example 7]

### Synthesis of 2,2-diethoxy-N-triethoxysilylmethyl-1-aza-2-silacyclopentane

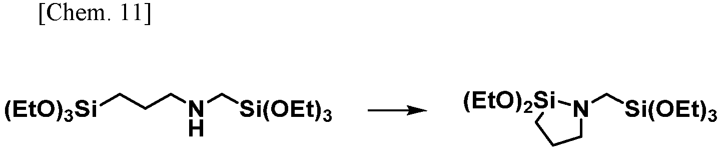

A four-necked glass flask equipped with a stirrer, thermometer, and reflux condenser was purged with nitrogen, charged with a 40 wt% THF solution of 126.1 g (0.2752 mol) of sodium hexamethyldisilazide, and cooled at 5°C. To the flask, 99.3 g (0.250 mol) of (triethoxysilylmethyl)(triethoxysilylpropyl)amine was added dropwise over 1 hour. The reaction solution was stirred at the temperature for 1 hour.

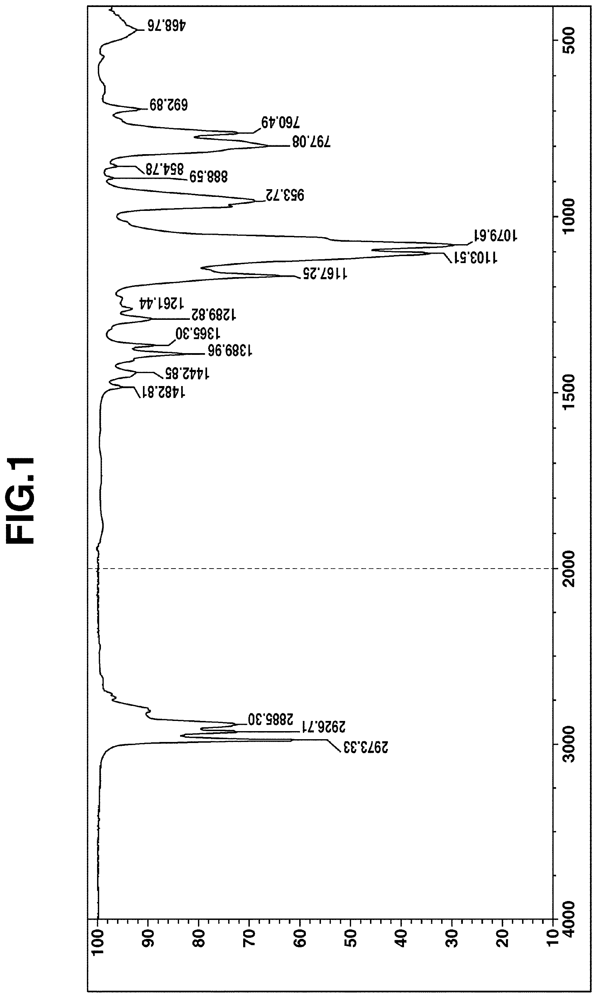

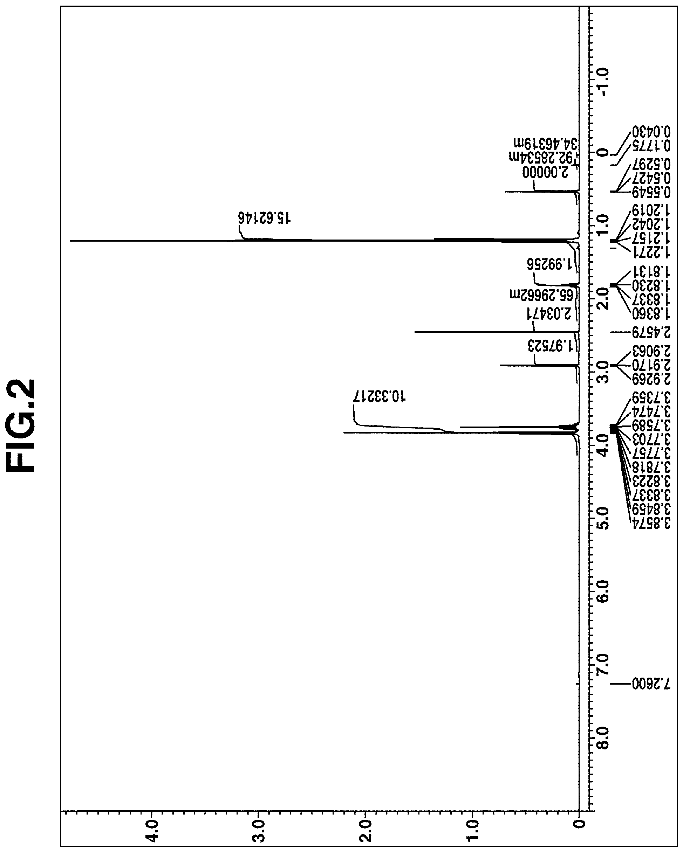

A GC analysis of the reaction solution revealed that 2,2-diethoxy-N-triethoxysilylmethyl-1-aza-2-silacyclopentane was formed at a conversion rate of 97%. Also, the reaction solution was filtered and then distilled, obtaining 54.0 g of 2,2-diethoxy-N-triethoxysilylmethyl-1-aza-2-silacyclopentane as a fraction having a boiling point of 105°C/0.4 kPa. The compound was analyzed by IR and ¹H-NMR spectroscopy, with the results shown in FIGS. 1 and 2.

### [Example 8]

### Synthesis of 2,2-diethoxy-N-triethoxysilylmethyl-1-aza-2-silacyclopentane

A four-necked glass flask equipped with a stirrer, thermometer, and reflux condenser was purged with nitrogen, charged with a 30 wt% MTHP solution of 85.7 g (0.116 mol) of chloromagnesium hexamethyldisilazide, and heated at 60°C. To the flask, 39.7 g (0.100 mol) of (triethoxysilylpropyl)(triethoxysilylmethyl)amine was added dropwise over 1 hour. The reaction solution was aged at 100°C for 1 hour. A GC analysis of the reaction solution revealed that 2,2-diethoxy-N-triethoxysilylmethyl-1-aza-2-silacyclopentane was formed at a conversion rate of 98%.

### [Example 9]

### Synthesis of 2,2-dimethoxy-N-trimethoxysilylmethyl-1-aza-2-silacyclopentane

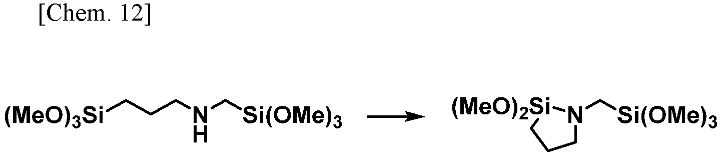

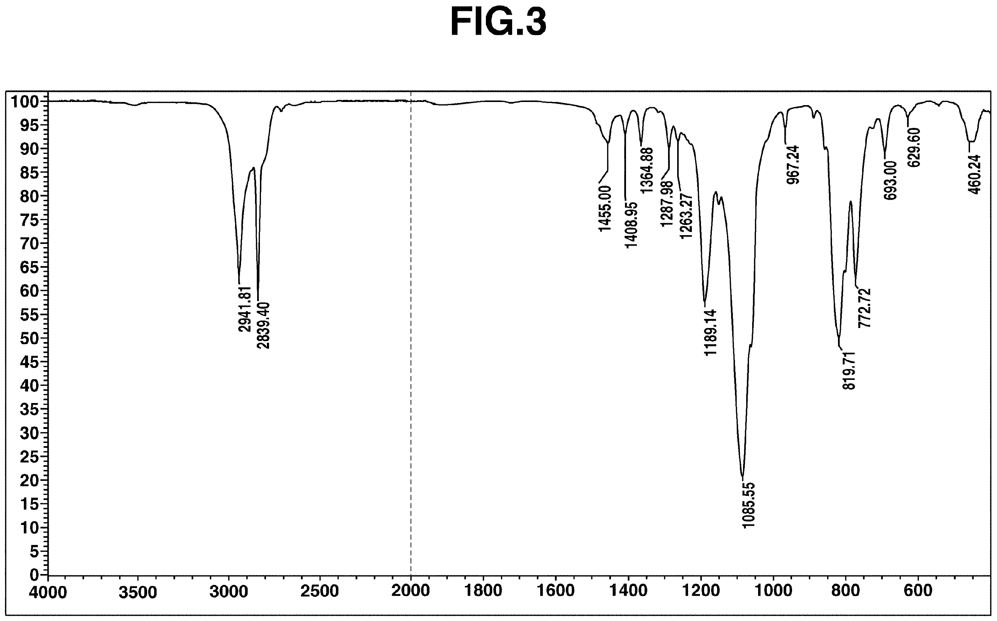

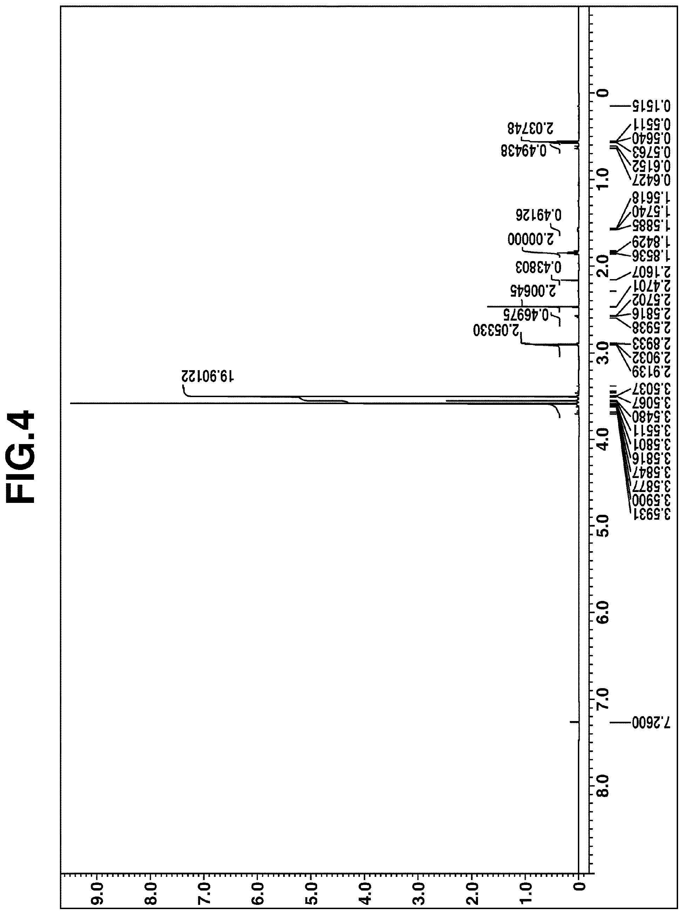

A four-necked glass flask equipped with a stirrer, thermometer, and reflux condenser was purged with nitrogen, charged with a 30 wt% MTHP solution of 85.7 g (0.116 mol) of chloromagnesium hexamethyldisilazide, and heated at 60°C. To the flask, 31.3 g (0.100 mol) of (trimethoxysilylpropyl)(trimethoxysilylmethyl)amine was added dropwise over 1 hour. The reaction solution was aged at 100°C for 1 hour. A GC analysis of the reaction solution revealed that 2,2-dimethoxy-N-trimethoxysilylmethyl-1-aza-2-silacyclopentane was formed at a conversion rate of 100%. Also, the reaction solution was filtered and then distilled, obtaining 47.0 g of 2,2-dimethoxy-N-trimethoxysilylmethyl-1-aza-2-silacyclopentane as a fraction having a boiling point of 109°C/0.8 kPa. The compound was analyzed by IR and ¹H-NMR spectroscopy, with the results shown in FIGS. 3 and 4.

### [Comparative Example 1]

### Synthesis of 2,2-dimethoxy-N-trimethoxysilylpropyl-1-aza-2-silacyclopentane

A three-necked glass flask equipped with a thermometer, reflux condenser, and distillation column was purged with nitrogen and charged with 170.5 g (0.500 mol) of bis(trimethoxysilylpropyl)amine and 0.27 g (0.0050 mol) of sodium methoxide. The reaction solution was heated under 0.6 kPa and kept under reflux for 5 hours while collecting methanol in a low-temperature trap. On GC analysis of the reaction solution, the conversion rate was 51%.

### [Comparative Example 2]

### Synthesis of 2,2-dimethoxy-N-trimethoxysilylpropyl-1-aza-2-silacyclopentane

A four-necked glass flask equipped with a stirrer, thermometer, and reflux condenser was purged with nitrogen, charged with 170.5 g (0.500 mol) of bis(trimethoxysilylpropyl)amine and 0.82 g (0.0025 mol) of dodecylbenzenesulfonic acid, and heated at 130°C. To the flask, 89.7 g (0.500 mol) of N-trimethylsilyl-N-methylaniline was added dropwise over 1 hour, followed by 2 hours of aging at the temperature. On GC analysis of the reaction solution at this point of time, the conversion rate was 75%.

The reaction solution was transferred to a three-necked glass flask equipped with a thermometer, reflux condenser, and distillation column. The solution was aged for 2 hours while withdrawing a low-boiling fraction, trimethylmethoxysilane. On GC analysis of the reaction solution, the conversion rate was 85%.

### [Comparative Example 3]

### Synthesis of 2,2-diethoxy-N-triethoxysilylmethyl-1-aza-2-silacyclopentane

A three-necked glass flask equipped with a thermometer, reflux condenser, and distillation column was purged with nitrogen and charged with 99.3 g (0.250 mol) 99.4 g (0.250 mol) of (triethoxysilylmethyl)(triethoxysilylpropyl)amine and 0.17 g (0.0025 mol) of sodium ethoxide. The reaction solution was heated under 0.5 kPa and kept under reflux for 5 hours while collecting ethanol in a low-temperature trap. On GC analysis of the reaction solution, the conversion rate was 33%. Part of the reactant was decomposed into low-boiling compounds.

### [Comparative Example 4]

### Synthesis of 2,2-diethoxy-N-triethoxysilylmethyl-1-aza-2-silacyclopentane

A four-necked glass flask equipped with a stirrer, thermometer, reflux condenser, and distillation column was purged with nitrogen, charged with 39.7 g (0.100 mol) of (triethoxysilylmethyl)(triethoxysilylpropyl)amine, 0.33 g (0.0010 mol) of dodecylbenzenesulfonic acid, and 44 g of toluene, and heated under reflux at 130°C. To the flask, 17.9 g (0.100 mol) of N-trimethylsilyl-N-methylaniline was added dropwise over 1 hour. As trimethylethoxysilane was formed, it was withdrawn along with toluene. On GC analysis of the reaction solution, the conversion rate was 8%. There were found disiloxane compounds resulting from reaction of trimethylethoxysilane (produced with the progress of reaction) with the reactant, (triethoxysilylmethyl)(triethoxysilylpropyl)amine or the product, 2,2-diethoxy-N-triethoxysilylmethyl-1-aza-2-silacyclopentane.

A comparison of Examples 1 to 3 with Comparative Examples 1 and 2 reveals that a high conversion rate is reached within a short time according to the preparation method of the invention. Specifically, in Comparative Example 1 wherein the cyclization rate is so low, the desired cyclic silazane compound and the reactant must be separated by distillation purification. In Comparative Example 2, the additional step of removing the low-boiling fraction resulting from reaction must be taken before a high conversion rate can be reached.

A comparison of Examples 7 and 8 with Comparative Examples 3 and 4 reveals that the preparation method of the invention is successful in obtaining the desired compound at a satisfactory conversion rate whereas the prior art methods reach a very low conversion rate or accompany side reactions.

The cyclic silazane compounds obtained in Examples 8 and 9 have an aminomethylalkoxysilyl structure in the molecule, which is known to have an extremely higher reactivity than an aminopropylalkoxysilyl structure. Owing to extremely high hydrolysis, the cyclic silazane compounds are expected to find application to fast-curing materials.

## Claims

1. A method for preparing a cyclic silazane compound comprising the step of subjecting an organoxysilane compound having a secondary amino group, represented by the general formula (1): 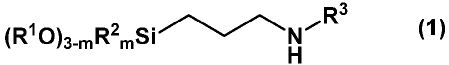 wherein R¹ and R² are each independently a C₁-C₁₀ unsubstituted monovalent hydrocarbon group, R³ is a C₁-C₁₀ monovalent hydrocarbon group which may contain an amino or alkoxysilyl group, and m is 0, 1 or 2, to intramolecular cyclization in the presence of an equivalent or more amount of a basic compound selected from organometallic compounds and organometallic amide compounds,
the cyclic silazane compound having the general formula (2): 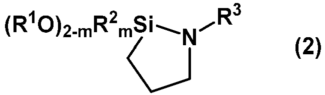 wherein R¹ to R³ and m are as defined above;
and further comprising converting alcohols produced by the intramolecular cyclization to metal alkoxides.

2. The method for preparing a cyclic silazane compound according to claim 1 wherein the metal is at least one element selected from lithium, sodium, potassium and magnesium.

3. The method for preparing a cyclic silazane compound according to claim 1 or 2, wherein said basic compound is at least one selected from the group consisting of n-butyllithium, tert-butyllithium, phenyllithium, isopropylmagnesium chloride, sec-butylmagnesium chloride, tert-butylmagnesium chloride, thexylmagnesium chloride, lithium diisopropylamide, lithium isopropyl-tert-butylamide, lithium di(tert-butyl)amide, lithium hexamethyldisilazide, sodium diisopropylamide, sodium isopropyl-tert-butylamide, sodium di(tert-butyl)amide, sodium hexamethyldisilazide, potassium hexamethyldisilazide, chloromagnesium diisopropylamide, chloromagnesium hexamethyldisilazide, and bromomagnesium hexamethyldisilazide.

## Patentansprüche

1. Verfahren zur Herstellung einer zyklischen Silazan-Verbindung, das den folgenden Schritt umfasst:
das Unterziehen einer Organoxysilan-Verbindung, die eine sekundäre Aminogruppe aufweist und durch die allgemeine Formel (1) dargestellt ist: 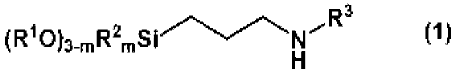 worin R¹ und R² jeweils unabhängig voneinander eine unsubstituierte einwertige C₁₋₁₀-Kohlenwasserstoffgruppe sind, R³ eine einwertige C₁₋₁₀-Kohlenwasserstoffgruppe ist, die gegebenenfalls eine Amino- oder Alkoxysilylgruppe enthält, und m = 0, 1 oder 2 ist, einer intramolekularen Zyklisierung in Gegenwart einer äquivalenten oder größeren Menge einer basischen Verbindung, die aus organometallischen Verbindungen und organometallischen Amid-Verbindungen ausgewählt ist,
wobei die zyklische Silazan-Verbindung die allgemeine Formel (2) aufweist: 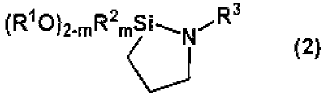 worin R¹ bis R³ und m wie oben definiert sind;
und weiters das Umwandeln von durch die intramolekulare Zyklisierung erzeugten Alkoholen in Metalloxide umfasst.

2. Verfahren zur Herstellung einer zyklischen Silazan-Verbindung nach Anspruch 1, wobei das Metall zumindest ein Element, ausgewählt aus Lithium, Natrium, Kalium und Magnesium ist.

3. Verfahren zur Herstellung einer zyklischen Silazan-Verbindung nach Anspruch 1 oder 2, wobei die basische Verbindung zumindest eine, ausgewählt aus der aus n-Butyllithium, tert-Butyllithium, Phenyllithium, Isopropylmagnesiumchlorid, sec-Butylmagnesiumchlorid, tert-Butylmagnesiumchlorid, Thexylmagnesiumchlorid, Lithiumdiisopropylamid, Lithiumisopropyl-tert-butylamid, Lithiumdi(tert-butyl)amid, Lithiumhexamethyldisilazid, Natriumdiisopropylamid, Natriumisopropyl-tert-butylamid, Natriumdi(tert-butyl)amid, Natriumhexamethyldisilazid, Kaliumhexamethyldisilazid, Chlormagnesiumdiisopropylamid, Chlormagnesiumhexamethyldisilazid und Brommagnesiumhexamethyldisilazid bestehenden Gruppe ist.

## Revendications

1. Procédé de préparation d'un composé de silazane cyclique comprenant l'étape consistant à soumettre un composé d'organoxysilane présentant un groupe amino secondaire, représenté par la formule générale (1) : 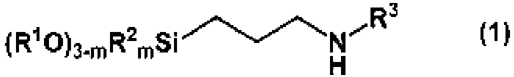 dans laquelle R¹ et R² sont chacun indépendamment un groupe hydrocarboné monovalent non substitué en C₁-C₁₀, R³ est un groupe hydrocarboné monovalent en C₁-C₁₀ qui peut contenir un groupe amino ou alcoxysilyle, et m est 0, 1 ou 2, à une cyclisation intramoléculaire en présence d'une quantité équivalente ou plus d'un composé basique choisi parmi des composés organométalliques et des composés d'amide organométalliques,
le composé de silazane cyclique présentant la formule générale (2) : 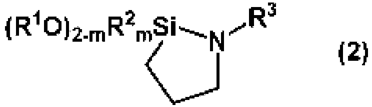 dans laquelle R¹ à R³ et m sont tels que définis ci-dessus ;
et comprenant en outre une conversion d'alcools produits par la cyclisation intramoléculaire en alcoxydes métalliques.

2. Procédé de préparation d'un composé de silazane cyclique selon la revendication 1, dans lequel le métal est au moins un élément choisi parmi le lithium, le sodium, le potassium et le magnésium.

3. Procédé de préparation d'un composé de silazane cyclique selon la revendication 1 ou 2, dans lequel ledit composé basique est au moins un choisi dans le groupe constitué du n-butyllithium, du tert-butyllithium, du phényllithium, du chlorure d'isopropylmagnésium, du chlorure de sec-butylmagnésium, du chlorure de tert-butylmagnésium, du chlorure de thexylmagnésium, du diisopropylamide de lithium, de l'isopropyl-tert-butylamide de lithium, du di (tert-butyl)amide de lithium, de l'hexaméthyldisilazide de lithium, du diisopropylamide de sodium, de l'isopropyl-tert-butylamide de sodium, du di (tert-butyl)amide de sodium, de l'hexaméthyldisilazide de sodium, de l'hexaméthyldisilazide de potassium, du diisopropylamide de chloromagnésium, de l'hexaméthyldisilazide de chloromagnésium et de l'hexaméthyldisilazide de bromomagnésium.
